# EUROPEAN PATENT SPECIFICATION

(11) **EP 2 525 173 B1**
(45) Date of publication and mention of the grant of the patent: **21.11.2018**
(21) Application number: 11166614.5
(22) Date of filing: 18.05.2011
(51) Int. Cl.: F25D 17/04

(54) **Fruits and vegetables compartment of a refrigerator with means for preserving freshness**
Obst- und Gemüsefach eines Kühlschranks mit Mitteln zur Aufrechterhaltung der Frische
Compartiment à fruits et légumes d'un réfrigérateur avec des moyens pour préserver la fraîcheur

(43) Date of publication of application: 21.11.2012
(73) Proprietor: WHIRLPOOL CORPORATION, Benton Harbor Michigan 49022 (US)
(72) Inventor: Biotti, Carolina, 21025, Comerio (IT); Soto, Cristian A, 21025, Comerio (IT); Gooden, Corey M., 21025, Comerio (IT)
(74) Representative: Spina, Alessandro

(56) References cited:
- EP-A1- 2 141 427
- WO-A2-2007/049937
- WO-A2-2007/072165
- JP-A- 2002 333 266

## Description

The present invention relates to a compartment of a refrigerator for storage of fruits and vegetables provided with means for preserving freshness. More particularly, the invention relates to a compartment of a refrigerator provided with means for controlling the ripening process and extending or preserving the freshness of fruits and vegetables by modifying the atmosphere within the compartment via a photo-catalytic process.

Refrigerators typically have special compartments, or "crisper drawers", to store fruits and vegetables, sometimes with mechanisms to control the humidity in the drawer.

WO2007/049937A2 discloses a refrigerator having a foodstuff storage container with optical deodorization modules based on UV light irradiation devices and photocatalyst filters. The document WO2007/072165A2 discloses a compartment of a refrigerator according to the preamble of claim 1. Many vegetables are sensitive to ethylene, a chemical released by many fruits and some vegetables. In general, fruits release more ethylene than vegetables in the natural ripening process. Foods that emit ethylene include: apples, avocados, bananas, pears, peaches, plums, cantaloupes, honey dew melons, mushrooms, and tomatoes. Vegetables that absorb ethylene include: brassicas, leafy greens, beans, carrots, cucumbers, eggplant, peas, peppers, and potatoes.

In general, ethylene increases the ripening process of fruits and vegetables. Such process includes a degradation of complex insoluble carbohydrates to simple soluble sugar compounds (e.g. glucose, fructose), which in turn cause an increasing in the sweetness and a loss of consistency of the foodstuff. The overall result is reduction of freshness and of shelf life.

As fruits and vegetables ripen in the closed compartment of a refrigerator, ethylene is released and accumulated in the atmosphere of the closed SUB-00756 compartment, which accelerates the ripening process of the surrounding produce, thereby reducing the shelf life and the freshness of the produce.

Since ethylene is physiologically active in traces (0.1ppm), it would be desirable to separate produces that are sensitive to ethylene from those releasing large amounts of such gas, and store them in separate and spaced-apart compartments. This, however, may not be a viable option due to the limited space available in a refrigerator.

The ripening process could be slowed down by reducing oxygen or ethylene content and/or increasing the concentration of inhibitor gases such as carbon dioxide.

U.S. 5,253,448 discloses a vegetables storage drawer of a refrigerator equipped with a gas-absorbing member disposed over the drawer to absorb noxious gases emitted by the vegetables. The absorbing member is a plate shaped from a traditional zeolite powder and is placed under a UV lamp that is switched on and off according to a predetermined time sequence. When the lamp is on, the absorbing member saturated with the noxious gases is regenerated, namely it turns to unsaturated and is ready to absorb noxious gases again.

The refrigerator storage drawer described above is based on the absorption of gases, including ethylene, by a zeolite material. It is not disclosed, however, what is the zeolite regeneration process, in particular it is not disclosed whether the absorbed gases are re-emitted into the drawer, which would not solve the problem, or are transformed into other substances.

Japanese patent publication JP 72-70044A discloses a gas removing device for a vegetable storage drawer of a refrigerator. The device includes an optical catalyst such as titanium or zinc oxide and an ultraviolet lamp. This latter activates the catalyst which decomposes ethylene or other ripening agents or substances causing bad smell. The gas removing device is confined in the ceiling of the vegetable storage drawer and comprises an elongated UV lamp (26) surrounded by the catalytic element (25) separated from the storage drawer by a perforated plate (29). The shape and size of the catalytic element, however, do not seem to be such as to provide a maximum contact area with the air in the drawer, which would be required to ensure an optimal catalytic efficiency. The only active part in controlling ripening is directly related to the lighting system and not to gases associated with the system itself. Also, the device is not designed to optimize the contact of the air containing the undesired gases with the catalytic surface since a protective cover consisting of a perforated plate is placed between the device and the storage compartment. Also, mounting of the device within the refrigerator requires certain modifications of the typical structure of the refrigerator inner parts.

Therefore the effectiveness of this device is in doubt.

There remain, thus, several disadvantages to, or problems not solved by, the vegetables storage drawers disclosed in the prior art documents mentioned above.

There is a need, therefore, for a fruit and vegetable compartment of a refrigerator that efficiently and effectively removes undesired ripening substances released by fruits and vegetable, thereby extending the shelf-life and freshness of such produces in a cost-effective way and minimizing the modifications to be made to the structure of the refrigerator.

It is therefore the overall object of the present invention to disclose an improved fruit and vegetable compartment of a refrigerator capable of controlling the ripening process of fruits and vegetables by preventing or limiting undesired and/or exceedingly fast ripening.

It is a further object of the present invention to disclose an improved fruit and vegetable compartment of a refrigerator capable of removing ethylene released during the ripening process of fruits and vegetables and converting it into substances that do not accelerate or limit the ripening process of fruits and vegetables.

It is a still further object of the present invention to disclose an improved fruit and vegetable compartment of a refrigerator which is cost-effective both during the manufacturing process and when functioning during the entire life of the refrigerator.

The present invention addresses these needs by providing a compartment of a refrigerator according to claim 1.

More particularly, the invention relates to a compartment of a refrigerator for storage of fruits and vegetables provided with means for controlling the ripening process and extending or preserving the freshness of fruits and vegetables by modifying the atmosphere within the compartment via a photo-catalytic process that converts ethylene into carbon dioxide and water.

Volatile organic compounds (VOC) present in the air at low concentrations can be oxidized to carbon dioxide and water when exposed to particles of titanium dioxide irradiated with near UV light. Suitable titanium dioxide particles are produced from titanium dioxide-sol generated by controlled hydrolysis of titanium isopropoxide.

Titanium dioxide particles supported on suitable supports exhibit higher photo-catalytic activity than unsupported titanium dioxide pellets.

The photo-assisted catalytic degradation of ethylene carried out by means of photo-reactors packed with TiO₂ pellets prepared by sol-gel method is described in the literature. The reaction rate depends on the on the light intensity, feed composition (ethylene, oxygen and water vapour) and temperature. It is reported that more than 95% ethylene was always completely mineralized irrespective of the reaction conditions.

It is known to a skilled person that other oxides of transition metals exert a photo-catalytic action in the conversion of ethylene or other VOC to carbon dioxide and water. Zinc oxide is an example of such photo-catalytic transition metals oxides. According to an aspect of the present invention, a refrigerator having a fruits and vegetable compartment is provided with means to carry out a photo-assisted catalytic degradation of ethylene and other VOC present in the atmosphere of the refrigerator.

According to another aspect of the present invention, the carbon dioxide produced by the reaction of ethylene and VOC conversion is substantially confined within the compartment and kept in contact with the produces contained therein, so that such carbon dioxide exerts an inhibitory effect of the ripening process of such produces.

Therefore, according to the present invention a photo-catalytic element is directly housed in the fruits and vegetables compartment of the refrigerator without any protective cover or other parts interposed between the catalytic element and the fruits and vegetables stored in the compartment. This serves the twofold function of maximising the contact between the ethylene/air mixture contained in the compartment and the photo-catalytic element to promote the conversion of ethylene to carbon dioxide, and maximise the contact of the carbon dioxide so produced with the fruits and vegetable, whereby the ripening process is inhibited or prevented.

According to an aspect of the present invention the photo-catalytic element comprises a support and an amount of TiO₂ particles of from 2 to 30% by weight, preferably from 5 to 20% by weight, more preferably from 8 to 15% by weight.

According to another aspect of the invention the photo-catalytic element comprises TiO₂ particles having an average size of from 0.1 to 20 µm, preferably from 0.5 to 15 µm, more preferably from 1 to 10 µm. Preferably the TiO₂ particles are in the anatase polymorphic form.

According to an embodiment of the invention the photo-catalytic element comprises a polymeric film coated with TiO₂ particles obtained by applying a layer of a suspension of TiO₂ particles in a suitable dispersing medium.

For example, a titanium dioxide-coated food packaging film prepared by using a colloidal suspension of anatase TiO₂ was tested for its catalytic properties towards the photo-degradation of ethylene. The TiO₂ suspensions were coated onto the surface of oriented-polypropylene film (OPP) using a bar coater and dried in air. The resulting film had a milky whitish appearance and it was found that the ethylene decomposition rate increased as the TiO₂ particle size was within the ranges defined above. An excellent photo-catalytic activity was obtained with the 10% TiO₂ particles coated film. The reduction of ethylene in the compartment atmosphere achieved by TiO₂-coated film was of about 90% using UV light lamps. According to another embodiment of the invention the catalytic element comprises a fabric or nonwoven impregnated with TiO₂ particles. This may be obtained by soaking the fabric or nonwoven with a suspension of TiO₂ particles, followed by a drying step. Depending on the thickness and size, the fabric or non woven may be used as such or mounted on a supporting frame to obtain a shaped photo-catalytic element of suitable rigidity, capable to keep its shape when placed in the refrigerator. An embodiment of the invention and a non-claimed example of a compartment are now described with reference to the attached drawings, in which:
- Fig. 1 is a schematic perspective view of an embodiment of a compartment of a refrigerator for storage of fruits and vegetables;
- Fig. 1A is a schematic top view of the cover of the compartment of Fig. 1;
- Fig. 1B is a schematic top view of the bottom of the compartment of Fig. 1;
- Fig. 1C is a schematic elevation view of a part of the compartment of Fig. 1;
- Fig. 1D is a schematic enlarged perspective view of a portion of the compartment of Fig. 1;
- Fig. 2 is a schematic perspective view of a non-claimed example of a compartment of a refrigerator for storage of fruits and vegetables;
- Fig. 2A is a schematic top view of the cover of the compartment of Fig. 2;
- Fig. 2B is a schematic top view of the catalytic element of the compartment of Fig. 2;
- Fig. 2C is a schematic elevation view of a part of the compartment of Fig. 2;
- Fig. 2D is a schematic enlarged perspective view of a portion of the compartment of Fig. 2.

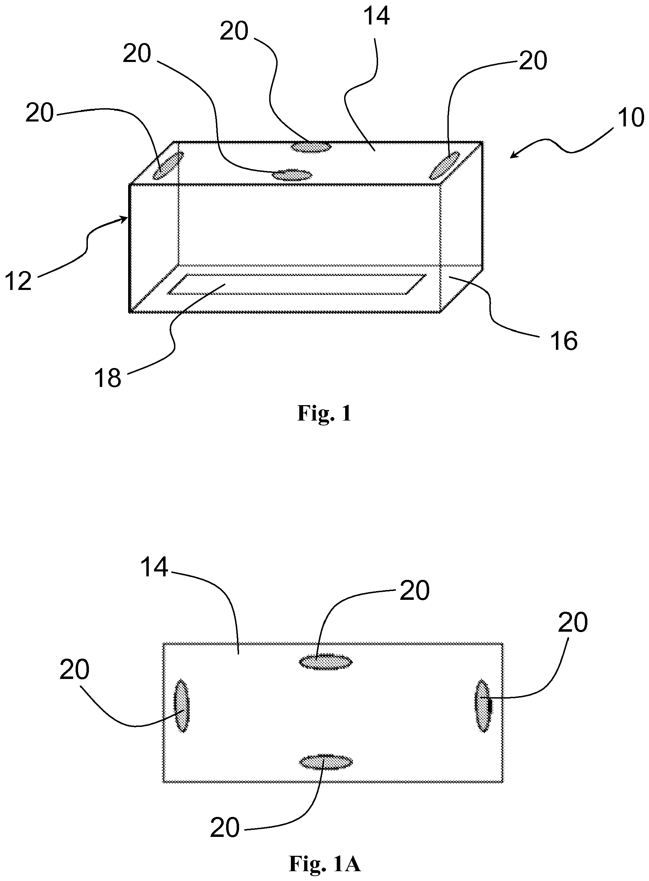

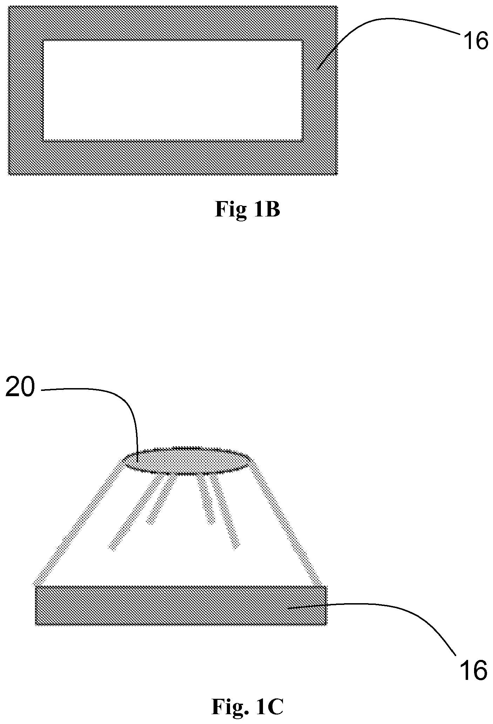

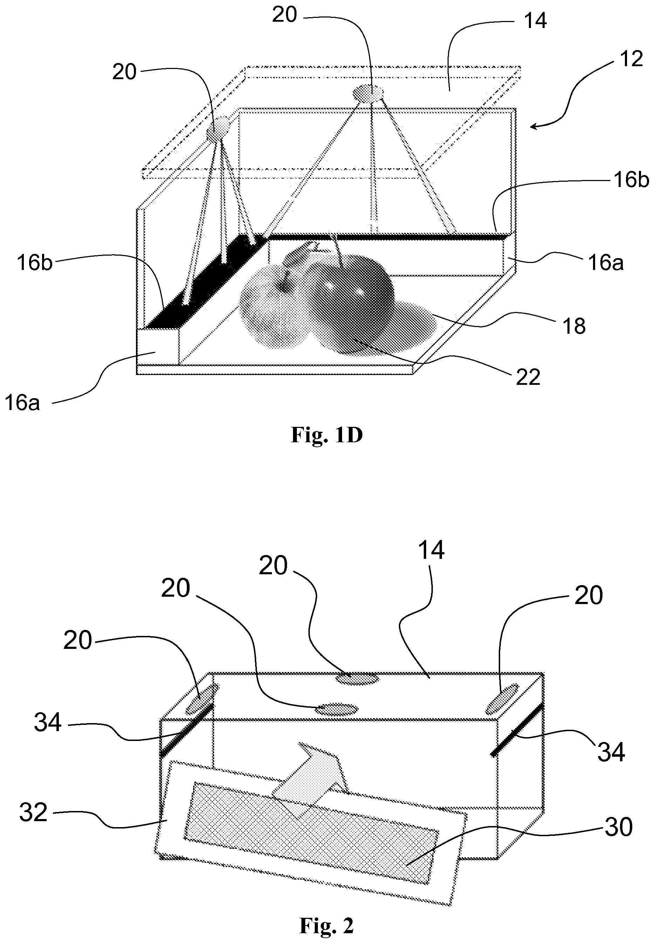

With reference to Figures 1-1D, a fruit and vegetable compartment, or crisper drawer, of a refrigerator is designated with 10. Such compartment is designed to be housed in a refrigerator (not shown), which typically comprises a refrigerating compartment, a freezing compartment, an evaporator located in the rear wall of the freezing compartment and other parts as known to the skilled person.

A crisper drawer consists thus essentially of a container 12 defining an inner chamber to store produce, open upwards and inserted in the refrigerator below an horizontal partition 14 forming a supporting plane for other products to be stored. Partition 14 forms also the cover of the crisper drawer or compartment.

A photo-catalytic element 16 is mounted within the inner chamber on the bottom 18 of the container 12. The photo-catalytic element 16 has the shape of a rectangular frame whose external size fits into the container 12, resting on the bottom 18 and extending along the peripheral portion of the bottom 18, so that the space within the rectangular frame forms a tray for storing produces 22. As mentioned above, the photo-catalytic element 16 comprises a polypropylene film 16a of a food packaging grade, coated with a layer 16b of titanium dioxide.

An array of UV lamps 20 are supported by partition 14, or cover of the crisper drawer. UV lamps 20 are mounted in cover 14 at positions vertically superimposed to the photo-catalytic element 16, namely they are placed near the perimeter of the cover 14. Such arrangement of UV lamps 20 directs the UV light emitted by the lamps toward corresponding portions of the photo-catalytic element 16, thereby exerting a photo-catalytic activity on the conversion of ethylene and other VOC to carbon dioxide and water.

UV lamps 20 are preferably of the LED type. They form a lighting system that works preferably according to an on/off algorithm. The photo-catalyzed reaction does not involve only ethylene reduction but also an increase in carbon dioxide content, which leads to a delay/inhibition of ripening and senescence. As previously described, carbon dioxide has a bacteriostatic effect on aerobic bacteria and mould, and inhibits produce respiration. The photo-formed -OH species, as consequence of such process, also play a significant effect in microbial and odor control as a supplementary benefit of the ethylene molecule inactivation.

The algorithm controlling the lighting system can be combined with data from an infra-red gas sensor suitable to detect carbon dioxide in the compartment. To avoid fruits and vegetables acidification, carbon dioxide concentration should be kept below 10%. Since this gas is very soluble in water, if its concentration exceeds this threshold, undesired acidification can occur and fruit and vegetable tissue consistency and taste could be modified.

The ripening and senescence delay may thus not only be based on ethylene degradation but also on control of the carbon dioxide level. The smaller the compartment air gaps, the less frequently the lighting system needs to be activated, which helps reducing energy consumption. Also, in order to avoid temperature increase in the compartment, the lit phase is associated with the compressor-on phase. The sensor can be selected in such way to directly control ethylene concentration and indirectly monitor the carbon dioxide content.

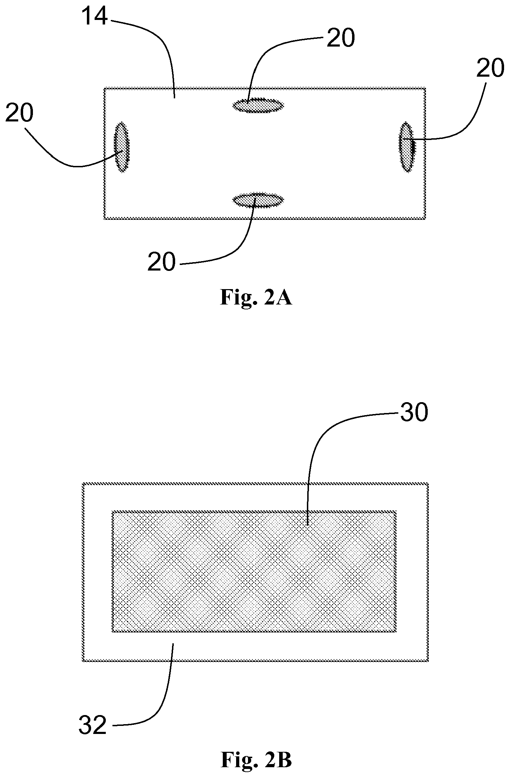

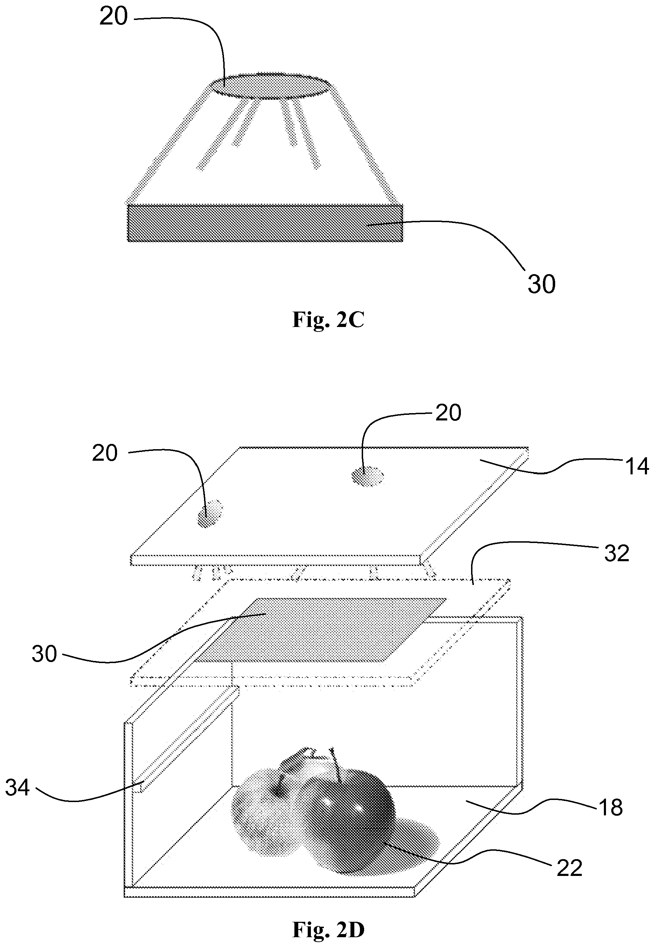

Figures 2-2D show a non-claimed example of a fruits and vegetables compartment.

In this compartment the photo-catalytic element 30 is a fabric impregnated with TiO₂ particles mounted on a rigid frame 32, as described above. The frame is in turn slidably mounted on drawer rails 34 fixed to the walls of the drawer, below the cover 14. The photo-catalytic element extends over the entire width of the container or drawer 12, so that the photo-catalytic action is exerted on a large surface of contact with the atmosphere of the drawer.

A lighting system comprising UV lamps 20 as described above is supported by the cover 14. The position of the UV lamps may be the same as described for the invention, namely close to the perimeter of the cover 14, or it may be different, for example including lamps arranged also in the centre of the cover 14 (not shown).

The photo-catalytic element 30 is mounted close to the cover 14 supporting the lighting system (as shown in Figures 2 and 2D), the optimal distance being a function of the UV LED intensity.

The crisper drawer can be equipped with a fan to better force air through the fabric 30.

It is apparent that in the invention and the above described non-claimed example the UV light emitted by the lamps 20 hits directly the photo-catalytic elements 16 or 30 without any other part of the compartment or refrigerator intercepting or filtering such light or generating shadows on the photo-catalytic element, which would reduce the catalytic action.

Also, carbon dioxide formed by the photo-catalytic conversion of ethylene is in direct contact with the produces contained in the compartment, and can effectively exerts its inhibitory action.

It is clear from the description above that other embodiments of the crisper drawer are possible within the same inventive concept.

## Claims

1. Compartment (10) of a refrigerator for storage of fruits and vegetables comprising a photo-catalytic element (16) and a source of UV light (20), said compartment comprising a bottom (18) and an open upper part defining an inner chamber open upwards, said source of UV light (20) comprising a plurality of UV lamps arranged above said photo-catalytic element (16), said compartment being **characterized in that** said photo-catalytic element (16) is housed on the bottom (18) of said inner chamber of said compartment and comprises at least a portion extending along the peripheral portion of the bottom (18) of said chamber, so that the UV light emitted by said lamps hits directly said photo-catalytic element, said photo-catalytic element having the shape of a rectangular frame (16) whose external size fits into said compartment (10) and extends along the peripheral portion of said compartment, resting on the bottom (18) of said compartment.

2. Compartment (10) of a refrigerator according to claim 1, **characterized in that** said photo-catalytic element (16) comprises particles of titanium dioxide.

3. Compartment (10) of a refrigerator according to claim 2, **characterized in that** said photo-catalytic element (16) comprises an amount of TiO₂ particles of from 2 to 30% by weight, preferably from 5 to 20% by weight, more preferably from 8 to 15% by weight.

4. Compartment (10) of a refrigerator according to claim 2, **characterized in that** said photo-catalytic element (16) comprises TiO₂ particles having an average size of from 0.1 to 20 µm, preferably from 0.5 to 15 µm, more preferably from 1 to 10 µm.

5. Compartment (10) of a refrigerator according to claim 2, **characterized in that** said photo-catalytic element (16) comprises TiO₂ particles in the anatase polymorphic form.

6. Compartment (10) of a refrigerator according to claim 5, **characterized in that** said photo-catalytic element (16) comprises a support (16a) coated with a layer (16b) of particles of titanium dioxide.

7. Compartment (10) of a refrigerator according to claim 1, **characterized in that** said plurality of UV lamps (20) are supported by a partition (14) of said compartment.

8. Compartment (10) of a refrigerator according to claim 7, **characterized in that** said plurality of UV lamps (20) are of the LED type.

9. Compartment (10) of a refrigerator according to claim 7 or 8, **characterized in that** said plurality of UV lamps (20) are operated according to an on/off algorithm which takes into account also data from an infra-red gas sensor suitable to detect the amount of carbon dioxide in said compartment, whereby carbon dioxide concentration is controlled.

10. Compartment (10) of a refrigerator according to claim 9, **characterized in that** said concentration of carbon dioxide is kept below 10% by weight.

## Patentansprüche

1. Fach (10) eines Kühlschranks zur Aufbewahrung von Obst und Gemüse, umfassend ein fotokatalytisches Element (16) und eine UV-Lichtquelle (20), wobei das Fach einen Boden (18) und einen offenen oberen Teil umfasst, der einen innere Kammer definiert, die nach oben offen ist, wobei die UV-Lichtquelle (20) eine Vielzahl von UV-Lampen umfasst, die über dem fotokatalytischen Element (16) angeordnet sind, wobei das Fach **dadurch gekennzeichnet ist, dass** das fotokatalytische Element (16) auf dem Boden (18) der inneren Kammer des Faches untergebracht ist und mindestens einen Teil umfasst, der sich entlang des peripheren Teils des Bodens (18) der Kammer erstreckt, sodass das von den Lampen emittierte UV-Licht direkt auf das fotokatalytische Element trifft, wobei das fotokatalytische Element die Form eines rechteckigen Rahmens (16) aufweist, dessen äußere Größe in das Fach (10) passt und sich entlang des peripheren Teils des Fachs erstreckt, und auf dem Boden (18) des Fachs ruht.

2. Fach (10) eines Kühlschranks nach Anspruch 1, **dadurch gekennzeichnet, dass** das fotokatalytische Element (16) Partikel von Titandioxid umfasst.

3. Fach (10) eines Kühlschranks nach Anspruch 2, **dadurch gekennzeichnet, dass** das fotokatalytische Element (16) eine Menge von TiO₂-Partikeln von 2 bis 30 Gewichts-%, vorzugsweise von 5 bis 20 Gewichts-%, mehr bevorzugt von 8 bis 15 Gewichts-% umfasst.

4. Fach (10) eines Kühlschranks nach Anspruch 2, **dadurch gekennzeichnet, dass** das fotokatalytische Element (16) TiO₂-Partikel umfasst, die eine durchschnittliche Größe von 0,1 bis 20 µm, vorzugsweise von 0,5 bis 15 µm, mehr bevorzugt von 1 bis 10 µm aufweisen.

5. Fach (10) eines Kühlschranks nach Anspruch 2, **dadurch gekennzeichnet, dass** das fotokatalytische Element (16) TiO₂-Partikel in der Anatas-Polymerform umfasst.

6. Fach (10) eines Kühlschranks nach Anspruch 5, **dadurch gekennzeichnet, dass** das fotokatalytische Element (16) einen Träger (16a) umfasst, der mit einer Schicht (16b) von Partikeln des Titandioxid beschichtet ist.

7. Fach (10) eines Kühlschranks nach Anspruch 1, **dadurch gekennzeichnet, dass** die Vielzahl von UV-Lampen (20) von einer Trennwand (14) des Fachs getragen wird.

8. Fach (10) eines Kühlschranks nach Anspruch 7, **dadurch gekennzeichnet, dass** die Vielzahl von UV-Lampen (20) Lampen des LED-Typs sind.

9. Fach (10) eines Kühlschranks nach Anspruch 7 oder 8, **dadurch gekennzeichnet, dass** die Vielzahl von UV-Lampen (20) nach einem Ein/Aus-Algorithmus funktioniert, der ebenfalls Daten aus einem Infrarot-Gassensor berücksichtigt, der geeignet ist, die Kohlendioxidmenge in dem Fach festzustellen, wodurch die Kohlendioxidkonzentration geregelt wird.

10. Fach (10) eines Kühlschranks nach Anspruch 9, **dadurch gekennzeichnet, dass** die Kohlendioxidkonzentration unter 10 Gew.-% gehalten wird

## Revendications

1. Compartiment (10) d'un réfrigérateur pour le stockage des fruits et légumes comprenant un élément photo-catalytique (16) et une source de lumière UV (20), ledit compartiment comprenant un fond (18) et une partie supérieure ouverte définissant une chambre intérieure ouverte vers le haut, ladite source de lumière UV (20) comprenant une pluralité de lampes UV agencées au-dessus dudit élément photo-catalytique (16), ledit compartiment étant **caractérisé en ce que** ledit élément photo-catalytique (16) est logé sur le fond (18) de ladite chambre intérieure dudit compartiment et comprend au moins une partie s'étendant le long de la partie périphérique du fond (18) de ladite chambre, de sorte que la lumière UV émise par lesdites lampes frappe directement ledit élément photo-catalytique, ledit élément photo-catalytique ayant la forme d'un cadre rectangulaire (16) dont la dimension externe s'adapte dans ledit compartiment (10) et s'étend le long de la partie périphérique dudit compartiment, reposant sur le fond (18) dudit compartiment.

2. Compartiment (10) d'un réfrigérateur selon la revendication 1, **caractérisé en ce que** ledit élément photo-catalytique (16) comprend des particules de dioxyde de titane.

3. Compartiment (10) d'un réfrigérateur selon la revendication 2, **caractérisé en ce que** ledit élément photo-catalytique (16) comprend une quantité de particules de TiO₂ de 2 à 30 % en poids, de préférence de 5 à 20 % en poids, plus préférentiellement de 8 à 15 % en poids.

4. Compartiment (10) d'un réfrigérateur selon la revendication 2, **caractérisé en ce que** ledit élément photo-catalytique (16) comprend des particules de TiO₂ ayant une taille moyenne de 0,1 à 20 µm, de préférence de 0,5 à 15 µm, plus préférentiellement de 1 à 10µm.

5. Compartiment (10) d'un réfrigérateur selon la revendication 2, **caractérisé en ce que** ledit élément photo-catalytique (16) comprend des particules de TiO₂ de forme polymorphe anatase.

6. Compartiment (10) d'un réfrigérateur selon la revendication 5, **caractérisé en ce que** ledit élément photo-catalytique (16) comprend un support (16a) revêtu d'une couche (16b) de particules de dioxyde de titane.

7. Compartiment (10) d'un réfrigérateur selon la revendication 1, **caractérisé en ce que** ladite pluralité de lampes UV (20) sont supportées par une cloison (14) dudit compartiment.

8. Compartiment (10) d'un réfrigérateur selon la revendication 7, **caractérisé en ce que** ladite pluralité de lampes UV (20) sont du type à LED.

9. Compartiment (10) d'un réfrigérateur selon la revendication 7 ou 8, **caractérisé en ce que** ladite pluralité de lampes UV (20) sont utilisées en fonction d'un algorithme de marche/arrêt qui prend également en compte des données d'un capteur de gaz par infrarouge adapté pour détecter la quantité de dioxyde de carbone dans ledit compartiment, selon lequel la concentration en dioxyde de carbone est régulée.

10. Compartiment (10) d'un réfrigérateur selon la revendication 9, **caractérisé en ce que** ladite concentration en dioxyde de carbone est maintenue en deçà de 10 % en poids.
